# EUROPÄISCHE PATENTANMELDUNG

(11) **EP 0 665 409 A1**
(43) Veröffentlichungstag der Anmeldung: **02.08.1995**
(21) Anmeldenummer: 95100715.2
(22) Anmeldetag: 19.01.1995
(51) Int. Cl.: F24D 19/08, F24D 3/12

(54) **Entlüftungseinrichtung für Warmwasserwandheizungen**

(30) Priorität: 27.01.1994 DE 4402417
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE); Birke, Karl, D-87640 Ebenhofen (DE)
(74) Vertreter: Kern, Wolfgang, Dipl.-Ing.

(57) **Zusammenfassung**

Die Erfindung betrifft eine Entlüftungseinrichtung für Warmwasserwandheizungen, mit einer Warmwasservorlaufrohrleitung und sich daran anschließenden auf der Gebäudewand oder in ihr unterputz verlegten, hintereinandergeschalteten Heizungsrohrschlangenfeldern (2a,2b,2c), die durch senkrechte Fallrohrleitungen (4,5) miteinander verbunden sind und von denen wenigstens das letztdurchströmte Heizungsrohrschlangenfeld (2c) an die Wasserrücklaufrohrleitung (6) angeschlossen ist.
Die Aufgabe der Erfindung besteht darin, die Entlüftungseinrichtung der genannten Art so weiterzubilden, daß die vollständige Entlüftung auch bei aus einer Vielzahl von hintereinandergeschalteten Wandheizungsschlangenfeldern gewährleistet ist.
Dies wird dadurch erreicht, daß jede Fallrohrleitung (4,5) im Bereich ihres oberen Endes eine Luftsammelkammer (7) aufweist, die direkt in die Rücklaufrohrleitung (6) entlüftet ist.

## Beschreibung

Die Erfindung betrifft eine Entlüftungseinrichtung für Warmwasserwandheizungen, mit einer Warmwasservorlaufrohrleitung und sich daran anschließenden auf der Gebäudewand oder in ihr unter Putz verlegten, hintereinandergeschalteten Heizungsrohrschlangenfeldern, die durch senkrechte Fallrohrleitungen miteinander verbunden sind und von denen wenigstens das letztdurchströmte Heizungsrohrschlangenfeld an die Wasserrücklaufrohrleitung angeschlossen ist.

Bei Warmwasserwandheizungen, bei denen also die Heizungsrohre in Form von Rohrschlangen mit parallel übereinanderliegenden Ästen an Gebäudewänden aufputz oder unterputz verlegt sind, stellt sich das Problem der Entlüftung der Rohrleitungen nach deren Füllung bzw. Wiederauffüllung oder auch nach längeren Betriebszeiten, da in das Rohrleitungssystem beispielsweise über die vorhanden Ventile und übliche Rohrverbindungselemente gewöhnlich Luft eindringt. Letzteres führt dazu, daß das System, wenn diese eingedrungene Luft nicht beseitigt wird, nicht vollständig mit Heizungswasser gefüllt wird bzw. gefüllt bleibt, so daß nicht nur der Heizungswirkungsgrad entsprechend abnimmt, sondern in den Leitungen auch Plätschergeräusche auftreten, verursacht dadurch, daß sich die absteigenden Rohre aufgrund vorhandener Luftpolster im oberen Bereich der absteigenden Rohre diese sich nicht oder nicht vollständig mit Wasser füllen.

Bisher wurden zur Entlüftung eines solchen Heizungsrohrsystems besondere Entlüftungsarmaturen benutzt, die gewöhnlich in der Rücklaufleitung eingebaut sind. In den Fällen jedoch, in denen großflächige Wandheizungen zum Einsatz gelangen, die aus einer Vielzahl von durch absteigende Vorlaufrohre miteinander verbundenen Feldern zusammengesetzt sind, müßte man jedes Vorlaufrohr mit einer Entlüftungsarmatur verbinden, um eine vollständige Füllung der Rohrschlangen zu erreichen. Dies wäre jedoch nicht nur aufwendig, sondern würde auch bedeuten, daß bei Unterputzverlegung des Rohrsystems die oberen Enden der Vorlauffalleitungen aus der Wand herausgeführt werden müßten, um die Entlüftungsarmatur zugänglich zu machen.

Die Aufgabe der Erfindung besteht deshalb darin, eine Entlüftungseinrichtung der genannten Art so auszubilden, daß die Entlüftung des Heizungsrohrsystems überall dort, wo die aufeinanderfolgenden Heizungsrohrfelder durch den Vorlauf bildende Fallrohrleitungen miteinander verbunden sind, wesentlich einfacher und kostengünstiger bewerkstelligt wird.

Diese Aufgabe wird erfindungsgemäß dadurch gelöst, daß jede Fallrohrleitung im Bereich ihres oberen Endes eine Luftsammelkammer aufweist, die direkt in die Rücklaufrohrleitung entlüftet ist. Dadurch wird vermieden, daß die Heizungsrohre an diesen Stellen mit Entlüftungsarmaturen versehen werden müssen, vielmehr erfolgt die Entlüftung nunmehr automatisch.

Die Luftsammelkammer kann gemäß einer vorteilhaften Ausgestaltung der Erfindung von einem Verbindungsrohrstück begrenzt werden, dessen eines Ende an die Heizungsrohrschlange angeschlossen und dessen anderes Ende über einen Entlüftungskanal an die Rücklaufrohrleitung angeschlossen sind.

Der Entlüftungskanal kann Bestandteil eines Entlüftungs-T-Stücks sein, dessen beide fluchtenden Auschlüsse in die Rücklaufrohrleitung eingebaut sind und in dessen senkrechten Abzweig das Verbindungsrohrstück eingesetzt ist.

Dadurch wird erreicht, daß das Rücklaufwasser, das das Entlüftungs-T-Stück durchströmt, an dem Entlüftungskanal vorbeiströmt und in diesem einen Unterdruck erzeugt, auf Grund dessen die in der Luftsammelkammer bzw. dem Verbindungsrohrstück oberhalb der Fallrohrleitung angesammelte bzw. aus dem Wasser ausgeschiedene Luft in den Rücklaufwasserstrom entweicht, um am Ende der Wasserrücklaufrohrleitung durch eine dort befindliche Entlüftungsarmatur aus dem System entfernt zu werden.

Der Entlüftungskanal hat zweckmäßigerweise eine die Wandung des Entlüftungs-T-Stücks in Richtung auf das Verbindungsrohrstück durchstoßene Bohrung mit einem im Vergleich zum Durchflußquerschnitt der Rücklaufrohrleitung bzw. des Verbindungsrohrstücks sehr kleinen Querschnitt, der so bemessen ist, daß der gewünschte Unterdruck im Entlüftungskanal entsteht.

Es hat sich ferner als vorteilhaft erwiesen, die Wandung des Entlüftungs-T-Stücks im Bereich der sie durchstoßenden Bohrung mit einer sich in das Verbindungsrohrstück hineinerstreckenden Auswölbung zu versehen, durch die hindurch sich die Bohrung bis unter den Spiegel des im Verbindungsrohrstück befindlichen Heizungswassers erstreckt. Dadurch wird erreicht, daß die Bohrung des Entlüftungskanals nicht durch im Wasser befindliche Schmutzteilchen und andere Partikel zugesetzt wird, da diese auf dem Wasserspiegel schwimmen, während sich die Bohrung unter den Spiegel erstreckt und damit von diesen aufschwimmenden Teilchen nicht berührt wird.

Gemäß einer weiteren Ausgestaltung der Erfindung mündet die Rücklaufrohrleitung jenseits aller Fallrohrleitungen in ein senkrechtes Rücklaufablußrohr, in das ein sich axial erstreckendes Entlüftungsrohr eingebaut ist, dessen unteres Ende mit einer Entlüftungsarmatur verbindbar ist und dessen oberes Ende sich über die Anschlußstelle der Rücklaufrohrleitung mit dem Rücklaufabflußrohr hinauserstreckt und in einer Luftsammelkammer mündet. Diese Konstruktion hat den Vorteil, daß die Entlüftung des Heizungssystems mit Hilfe einer Entlüftungsarmatur im Bereich des Gebäudebodens bzw. Estrichs erfolgen kann und nicht am Ende der Rücklaufrohrleitung durchgeführt werden muß, die in erheblicher Höhe über dem Gebäudeboden verläuft, da sie über den Heizungsschlangen der einzelnen Felder angeordnet ist, wodurch auch eine mögliche Verschmutzung der Gebäudewandung, an der bzw. in der die Wandheizung montiert ist, vermieden wird.

Um zu verhindern, daß das obere Ende des Entlüftungsrohres durch im Heizungswasser mitgeführte Schmutzteilchen und andere Partikel zugesetzt wird, hat es sich bewährt, dieses Ende abzuschrägen. Dabei hat es sich auch bewährt, das Rücklaufabflußrohr und die Rücklaufrohrleitung über ein T-Stuck rechtwinkelig miteinander zu verbinden, in dessen unteren Anschluß das Rücklaufabflußrohr hineinreicht und in dessen oberen, mit dem unteren Anschluß fluchtenden Anschluß ein Verbindungsrohrstück eingesetzt ist, durch das sich das Entlüftungsrohr hindurcherstreckt und dessen oberes Ende durch eine lösbare Kappe verschlossen ist.

In den Fällen, in denen die Rücklaufrohrleitung jenseits aller Falleitungen in ein senkrechtes Rücklaufabflußrohr mündet, dessen oberes Ende mit einer Entlüftungsarmatur versehen ist, hat es sich bewährt, die Verbindung zwischen der Rücklaufrohrleitung und dem Rücklaufabflußrohr mittels eines T-Stücks zu bewerkstelligen, in das die Entlüftungsarmatur einschraubbar ist.

Ein ähnliche T-Stück kann in den Fällen zur Anwendung kommen, in denen die Entlüftungsarmatur über dem Gebäudeboden angeordnet wird.

Weitere Ausgestaltungen sind den Unteransprüchen zu entnehmen.

Die Erfindung wird nachfolgend an Hand der in der Zeichnung dargestellten Ausführungsformen beispielshalber näher erläutert. In der Zeichnung zeigen:
- Fig. 1: eine schematische Seitenansicht einer an einer Gebäudewand angeordneten Wandheizung, die aus drei miteinander verbundenen Heizungsfeldern besteht und über dem Estrich entlüftet werden kann,
- Fig. 2: eine Fig. 1 ähnliche Ansicht einer Wandheizung, die jedoch am Ende der Rücklaufrohrleitung entlüftbar ist,
- Fig. 3: eine geschnittene Teilansicht des ersten Heizungsfeldes von Fig. 2,
- Fig. 4: eine geschnittene Teilansicht des ersten Heizungsfeldes von Fig. 1,
- Fig. 5: eine Schnittansicht eines in den Heizungsfeldern von Fig. 1 und Fig. 2 verwendeten Entlüftungs-T-Stücks,
- Fig. 6: eine Schnittansicht eines weiteren in den Heizungsfeldern von Fig. 1 und Fig. 2 verwendeten Entlüftungs-T-Stücks, und
- Fig. 7: eine Schnittansicht noch einer anderen Ausführungsform eines in den Heizungsfeldern von Fig. 1 und Fig. 2 verwendeten Entlüftungs-T-Stücks.

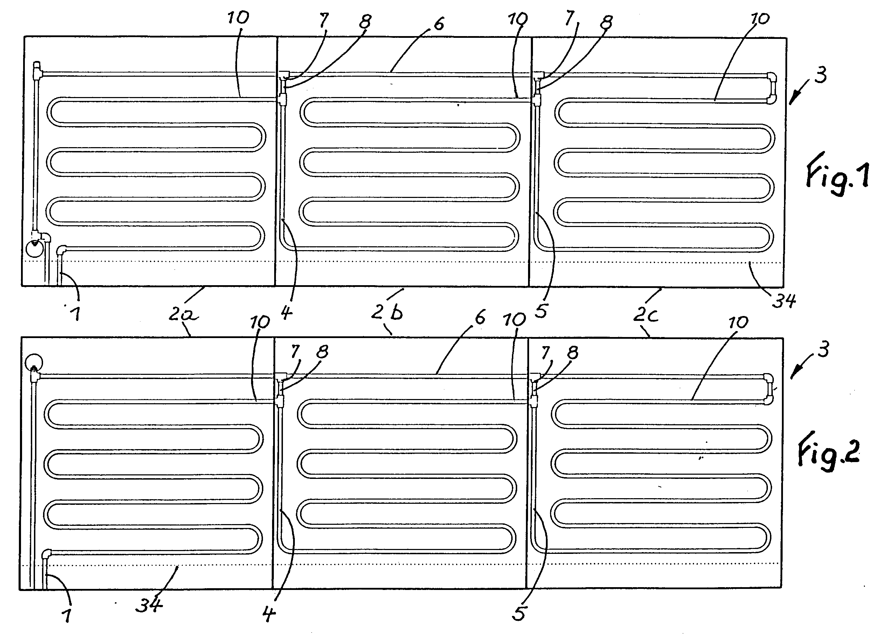

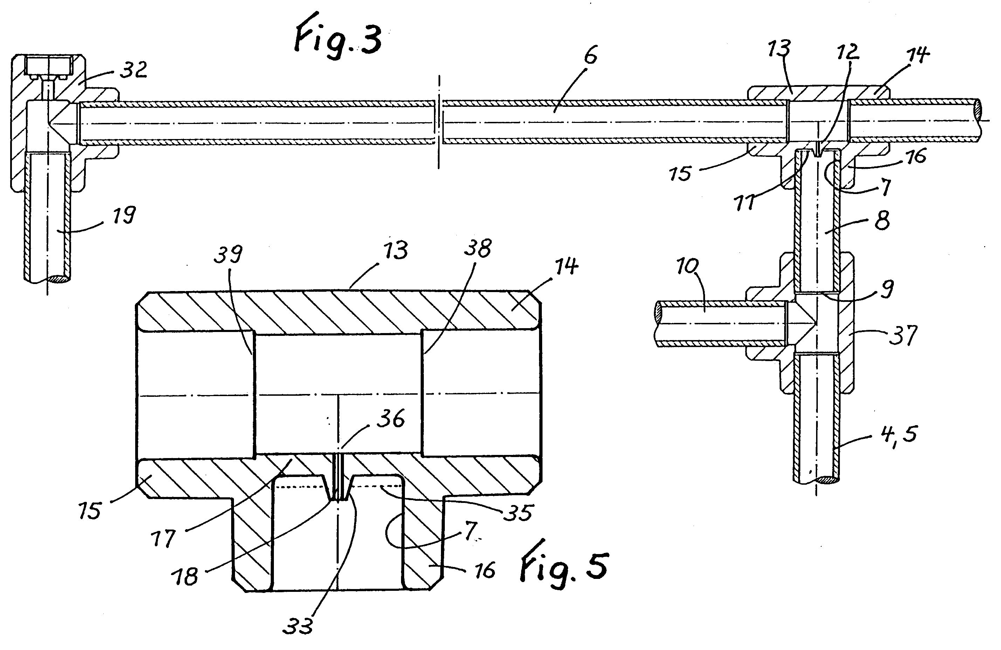

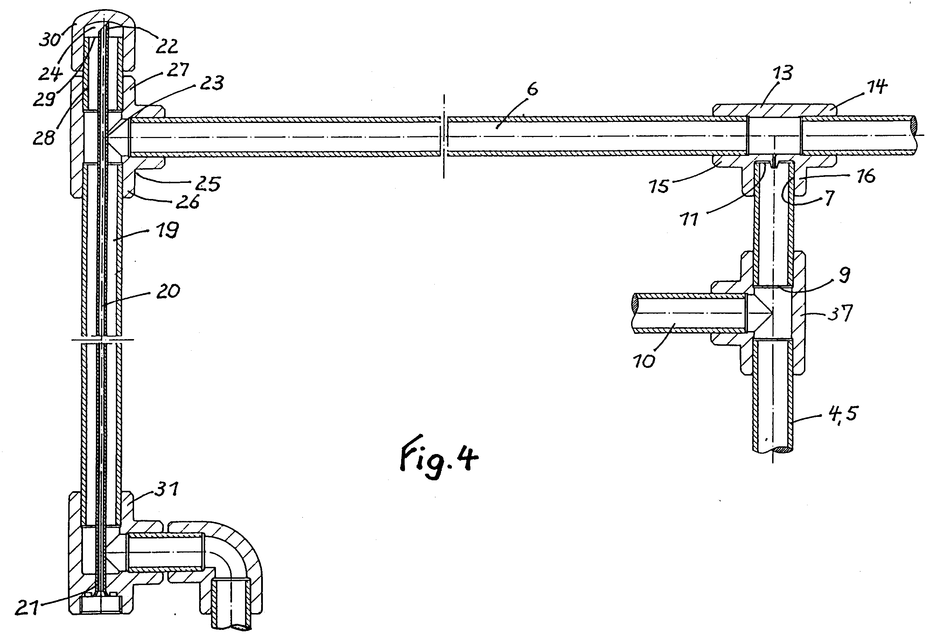

Bei den in den **Fig. 1 und 2** schematisch dargestellten Warmwasserwandheizungen sind an einer Gebäudewand 3 jeweils 3 Heizungsrohrschlangenfelder 2a, 2b, 2c hintereinandergeschaltet, d.h. in Reihe miteinander verbunden, wobei die Warmwasservorlaufrohrleitung 1 aus dem Estrich 34 aufsteigt und eine aus einer Vielzahl paralleler, sich waagrecht erstreckender Äste bestehende Heizrohrschlange 10 speist, die an ihrem Ende in ein muffenförmiges T-Stück 37 (**Fig. 3 und Fig. 4**) mündet. An das T-Stück ist als Fallrohrleitung 4, 5 die Vorlaufleitung für die folgende Heizungsrohrschlange 10 angeschlossen sowie nach oben zu ein Verbindungsrohrstück 8, dessen unteres Ende 9 mit dem Muffenrohrstück 37 verschweißt ist. Alle Rohrleitungen und T-Stücke des beschriebenen Systems bestehen in diesem Fall aus Kunststoff.

Das obere Ende 11 des Verbindungsrohrstücks 8 ist, wie aus **Fig. 3** ersichtlich, in den senkrechten Abzweig 16 eines Entlüftung-T-Stücks 13 eingebaut, wobei der Abzweig 16 eine Sammelkammer 7 bildet. Die beiden fluchtenden Anschlüsse 14, 15 des Entlüftungs-T-Stücks 13 sind in die Rücklaufrohrleitung 6 eingebaut, wobei die Enden der Rohrleitungsstücke an in dem Entlüftungs-T-Stück 13 befindlichen Anschlägen 38, 39, wie aus **Fig. 5** ersichtlich, anstoßen.

Die in der Luftsammelkammer 7 bzw. dem Verbindungsrohrstück 8 sich sammelnde Luft. die beim Füllen bzw. Auffüllen des Heizungssystems und während längeren Betriebs auf Grund von durch die vorhanden Ventile und andere Verbindungsmittel auftretenden Undichtigkeiten vom Heizungswasser verdrängt wird bzw. in dieses gelangt, ist bekanntlich bestrebt, zum höchsten Punkt des Rohrsystems aufzusteigen. Dies bedeute, die Fallrohrleitungen 4, 5, in denen das Vorlaufwasser der folgenden Heizungsrohrschlange 10 zufließt, würden sich nicht vollständig füllen, wenn die Luft nicht die Möglichkeit hätte, durch das Verbindungsrohrstück 8 in die Luftsammelkammer 7 aufzusteigen. Die Entlüftung dieser Kammer geschieht durch einen Entlüftungskanal 12 in der Wandung 17 des Entlüftungs-T-Stücks 13, welcher von einer diese Wandung durchstoßenden Bohrung 18 gebildet wird, die einen im Vergleich zum Durchflußquerschnitt der Rücklaufrohrleitung 6 bzw. des Verbindungsrohrstücks 8 sehr kleinen Querschnitt hat.

Das an der Öffnung 36 des Kanals 18 durch die Rücklaufrohrleitung 6 hindurchströmende Wasser erzeugt in der Bohrung 18 einen Unterdruck, durch den die im Verbindungsrohrstück 8 bzw. der Luftsammelkammer 7 angesammelte Luft in die Rücklaufrohrleitung 6 entweicht bzw. von dem vorbeiströmenden Wasser mitgerissen wird.

Die Wandung 17 des Entlüftungs-T-Stücks 13 weist, wie aus Fig. 5 ersichtlich, im Bereich der Bohrung 18 eine sich in das Verbindungsrohrstück 8 hineinerstreckende Auswölbung 33 auf, die einen kegelstumpfförmigen Umriß hat und durch die sich die Bohrung 18 hindurch bis unter den Heizungswasserspiegel 35 im Verbindungsrohrstück 8 erstreckt. Dadurch wird verhindert, das im Heizungswasser mitgeführte und in Höhe des Spiegels 35 schwimmende Schmutzteilchen und andere Partikelchen die Bohrung 18 zusetzen und dadurch den Entlüftungseffekt behindern bzw. vollständig aufheben.

Der Querschnitt der Bohrung 18 ist in jedem Fall so bemessen, daß einerseits der gewünschte Unterdruck erzeugt wird, andererseits vermieden wird, daß der Heizungskreislauf kurzgeschlossen wird, d.h., Heizungswasser in großer Menge durch die Entlüftungsbohrung mit hindurchgesaugt wird.

Es versteht sich, daß an Stelle eines einzigen Entlüftungskanals 12 bzw. einer einzigen Bohrung 18 auch mehrere solcher Kanäle bzw. Bohrungen im Entlüftungs-T-Stück 13 verwendbar sind, falls die Entlfütungsbedingungen dies erforderlich machen.

Bei der in den **Fig. 2 und 3** gezeigten Ausführungsform der Warmwasserwandheizung strömt das Rücklaufwasser durch die Rücklaufrohrleitung 6, an deren Ende sich ein T-Stück 32 befindet, in das ein Rücklaufabflußrohr 19 eingeschweißt ist, das in den Estrich 34 eintaucht. In das T-Stück 32 und damit im Bereich des oberen Endes des Rücklaufäbflußrohres 19 ist eine nicht dargestellte Entlüftungsarmatur eingeschraubt, durch die die Luft aus dem Heizungskreislauf und insbesondere die über die Entlüftungs-T-Stücke 13 in das Rücklaufwasser gelangten Luftblasen abgelassen werden können.

In den Fällen jedoch, in denen die Entlüftung des Heizungssystems im Bereich des Estrichs bzw. Gebäudebodens erfolgen soll, ist die Wandheizung gemäß der in den **Fig. 1 und 4** dargestellten Auführungsform ausgebildet. Dies bedeutet, daß die Rücklaufrohrleitung 6 jenseits aller Fallrohrleitungen 4, 5 in ein senkrechtes Rücklaulabflußrohr 19 mündet, in das ein sich axial erstreckendes Entlüftungsrohr 20 eingebaut ist, das aus Kunststoff besteht und im Rücklaufabflußrohr zentrisch angeordnet ist. Das untere Ende 21 dieses Entlüftungsrohres ist über ein T-Stück 31 mit einer nicht dargestellten Entlüftungsarmatur verbunden, während das obere Entlüftungsrohrende 22 abgeschrägt ist und sich über die Anschlußstelle 23 der Rücklaufrohrleitung 6 mit dem Rücklaufabflußrohr 19 hinauserstreckt, um in einer Luftsammelkammer 24 zu münden. Das Rücklaufabflußrohr 19 und die Rücklaufrohrleitung 6 sind über ein T-Stück 25 rechtwinkelig miteinander vebunden, dessen unterer Anschluß 26 das Rücklaufabflußrohr aufnimmt und dessen oberer, mit dem unteren Anschluß fluchtender Anschluß 27 mit einem Verbindungsrohrstück 28 verschweißt ist, durch das sich das Entlüftungsrohr 20 hindurcherstreckt.

Das obere Ende 29 des Verbindungsrohrstückes 28 ist durch eine lösbare Kappe 30 verschlossen.

Diese Konstruktion ermöglicht es, daß die aus der Rücklaufrohrleitung 6 zusammen mit dem Wasser in das Rücklaufabflußrohr 19 eintretende Luft durch das Verbindungsrohrstück 28 nach oben steigt und sich unter der Kappe 30 sammelt, wo sie mit dem abgeschrägten Ende 22 des Entlüftungsrohres 20 in Berührung tritt. Wird nun die Entlüftungsarmatur am unteren Ende des Rücklaufabflußrohres 19 geöffnet, so drückt das im Rücklaufabflußrohr befindliche Wasser die unter der Kappe 30 angesammelte Luft durch das Entlüftungsrohr 20 aus der Entlüftungsarmatur heraus. Man wird also zweckmäßigerweise die Entlüftungsarmatur so lange geöffnet lassen, bis dort Heizungswasser austritt.

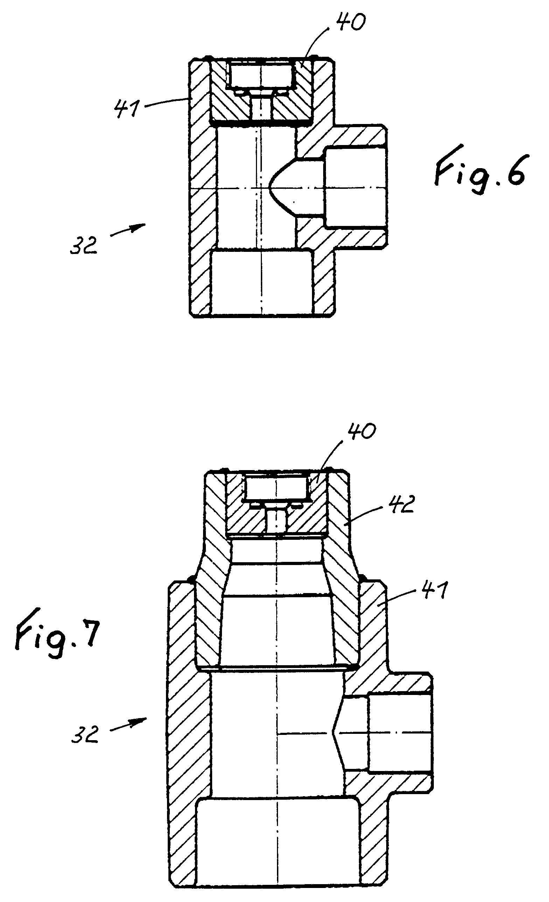

Die Figuren 6 und 7 zeigen zwei weitere Ausführungsformen des in den Heizungsfeldern von Fig. 1 und Fig. 2 im oberen Ende des Rücklaufrohres 19 (siehe Fig. 3) verwendeten Entlüftungs-T-Stückes 32.

Bei der Ausführungsform von Fig. 6 ist in das freie, also nicht mit Leitungsanschlüssen belegten Abzweig 41 des T-Stücks, der gewöhnlich nach oben ragt, eine handelsübliche Entlüftungsschraube 40 eingeschweißt.

Bei der Ausführugn nach Fig. 7 ist die Entlüftungsschraube 40 in eine Muffe 42 eingeschweißt, die ihrerseits mit dem unbelegten Abzweig 41 des T-Stücks 32 verschweißt ist. Auf diese Weise wird das Luftaufnahmevolumen des T-Stücks unterhalb der Entlüftungsschraube vergrößert.

## Patentansprüche

1. Entlüftungseinrichtung für Warmwasserwandheizungen, mit einer Warmwasservorlaufrohrleitung (1) und sich daran anschließenden auf der Gebäudewand (3) oder in ihr unterputz verlegten, hintereinandergeschalteten Heizungsrohrschlangenfeldern (2a, 2b, 2c), die durch senkrechte Fallrohrleitungen (4, 5) miteinander verbunden sind und von denen wenigstens das letztdurchströmte Heizungsrohrschlangenfeld (2c) an die Wasserrücklaufrohrleitung (6) angeschlossen ist, **dadurch gekennzeichnet**, daß jede Fallrohrleitung (4, 5) im Bereich ihres oberen Endes eine Luftsammelkammer (7) aufweist, die direkt in die Rücklaufrohrleitung (6) entlüftet ist.

2. Entlüftungseinrichtung nach Anspruch 1, **dadurch gekennzeichnet,** daß die Luftsammelkammer (7) von einem Verbindungsrohrstück (8) begrenzt wird, dessen eines Ende (9) an die Heizungsrohrschlange (10) angeschlossen und dessen anderes Ende (11) über einen Entlüftungskanal (12) an die Rücklaufrohrleitung (6) angeschlossen sind.

3. Entlüftungseinrichtung nach Anspruch 2, **dadurch gekennzeichnet**, daß der Entlüftungskanal (12) Bestandteil eines Entlüftungs-T-Stücks (13) ist, dessen beide fluchtenden Anschlüsse (14, 15) in die Rücklaufrohrleitung (6) eingebaut sind und in dessen senkrechten Abzweig (16) das Verbindungsrohrstück (8) eingesetzt ist.

4. Entlüftungseinrichtung nach Anspruch 3, **dadurch gekennzeichnet**, daß der Entlüftungskanal (12) eine die Wandung (17) des Entlüftungs-T-Stücks (13) in Richtung auf das Verbindungsrohrstöck (8) durchstoßende Bohrung (18) mit einem im Vergleich zum Durchflußquerschnitt der Rücklaufrohrleitung (6) bzw. des Verbindungsrohrstücks (8) sehr kleinen Querschnitt ist.

5. Entlüftungseinrichtung nach Anspruch 4, **dadurch gekennzeichnet**, daß der Querschnitt der Bohrung (18) so bemessen ist, daß in der Bohrung durch das in der Rücklaufrohrleitung (6) an der Bohrungsöffnung vorbeiströmende Wasser ein Unterdruck (36) erzeugbar ist, der die in der Luftsammelkammer (7) bzw. dem Verbindungsrohrstück (8) sich sammelnde Luft aus der Bohrung heraus in das vorbeiströmende Wasser reißt.

6. Entlüftungseinrichtung nach den Ansprüchen 4 oder 5, **dadurch gekennzeichnet,** daß die Wandung (17) im Bereich der Bohrung (18) eine sich in das Verbindungsrohrstück (8) hineinerstreckende Auswölbung (33) aufweist, durch die sich die Bohrung (18) hindurch bis unter den Spiegel (35) des im Verbindungsrohrstück (8) befindlichen Heizungswassers erstreckt.

7. Entlüftungseinrichtung nach Anspruch 6, **dadurch gekennzeichnet**, daß die Auswölbung (33) einen kegelstumpfförmigen Umriß aufweist.

8. Entlüftungseinrichtung nach einem der Ansprüche 1 - 7, **dadurch gekennzeichnet**, daß die Rücklaufrohrleitung (6) jenseits aller Fallrohrleitungen (4, 5) in ein senkrechtes Rücklaufabflußrohr (19) mündet, in das ein sich axial erstreckendes Entlüftungsrohr (20) eingebaut ist, dessen unteres Ende (21) mit einer Entlüftungsarmatur verbindbar ist und dessen oberes Ende (22) sich über die Anschlußstelle (23) der Rücklaufrohrleitung (6) mit dem Rücklaufabflußrohr (19) hinauserstreckt und in einer Luftsammelkammer (24) mündet.

9. Entlüftungseinrichtung nach Anspruch 8, **dadurch gekennzeichnet**, daß das obere Ende (22) des Entlüftungsrohres (20) abgeschrägt ist.

10. Entlüftungseinnichtung nach Anspruch 8 oder 9, **dadurch gekennzeichnet,** daß das Rücklaufabflußrohr (19) und die Rücklaufrohrleitung (6) über ein T-Stück (25) rechtwinklig miteinander verbunden sind, in dessen unteren Anschluß (26) das Rücklaufabflußrohr (19) hineinreicht und in dessen oberen, mit dem unteren Anschluß fluchtenden Anschluß (27) ein Verbindungsrohrstück (28) eingesetzt ist, durch das sich das Entlüftungsrohr (20) hindurcherstreckt und dessen oberes Ende (29) durch eine lösbare Kappe (30) verschlossen ist.

11. Entlüftungseinrichtung nach einem der Ansprüche 1 - 7, **dadurch gekennzeichnet**, daß die Rücklaufrohrleitung (6) jenseits aller Falleitungen (4, 5) in ein senkrechtes Rücklaufabflußrohr (19) mündet, dessen oberes Ende mit einer Entlüftungsarmatur versehen ist.

12. Entlüftungseinrichtung nach Anspruch 11, **dadurch gekennzeichnet**, daß die Verbindung zwischen der Rücklaufrohrleitung (6) und dem Rücklaufabflußrohr (19) mittels eines T-Stücks (32) erfolgt, das mit einer Entlüftungsarmatur versehen ist.

13. Entlüftungseinrichtung nach Anspruch 11, **dadurch gekennzeichnet**, daß die Entlüftungsarmatur eine Entlüftungsschraube (40) ist, die in den einen Abzweig (41) des T-Stückes (32) eingeschweißt ist.

14. Entlüftungseinrichtung nach Anspruch 11, **dadurch gekennzeichnet**, daß die Entlüftungsarmatur eine Entlüftungsschraube ist, die in eine separate Muffe (42) eingeschweißt ist, welche ihrerseits in den einen Abzweig (41) des T-Stücks (32) eingeschweißt ist.

15. Entlüftungseinrichtung nach einem der Ansprüche 1 - 14, **dadurch gekennzeichnet**, daß alle wasserführenden Rohrleitungen (4, 5, 6, 10, 19), Verbindungsstücke (8, 28) und T-Stücke (13, 25, 32) aus Kunststoff bestehen und miteinander verschweißt sind.

16. Entlüftungseinrichtung nach einem der Ansprüche 8 - 15, **dadurch gekennzeichnet**, daß das Entlüftungsrohr (20) aus Kunststoff besteht und im Rücklaufabflußrohr (19) zentrisch angeordnet ist.

17. Entlüftungseinrichtung nach Anspruch 16, **dadurch gekennzeichnet**, daß das Entlüftungsrohr (20) im Bereich seines unteren Endes (21) in dem T-Stück (31), in dem die Entlüftungsarmatur angeordnet ist, befestigt ist.
